# FASCICULE DE BREVET EUROPEEN

(11) **EP 0 914 594 B1**
(45) Date de publication et mention de la délivrance du brevet: **14.05.2003**
(21) Numéro de dépôt: 97935619.3
(22) Date de dépôt: 24.07.1997
(51) Int. Cl.: G01F 23/296, B06B 1/06

(54) **DISPOSITIF PIEZO-ELECTRIQUE DE JAUGEAGE DE LIQUIDE**
PIEZOELEKTRISCHER FLÜSSIGKEITSSTANDMESSER
PIEZOELECTRIC LIQUID GAUGING DEVICE

(30) Priorité: 26.07.1996 FR 9609434
(43) Date de publication de la demande: 12.05.1999
(73) Titulaire: MARWAL SYSTEMS, 51000 Chalons en Champagne (FR)
(72) Inventeur: DENNEULIN, Denis, F-51000 Châlons-en-Champagne (FR); CHING, Gil, F-06110 Le Cannet (FR)
(74) Mandataire: Texier, Christian
(86) Numéro de dépôt international: FR9701384
(87) Numéro de publication internationale: WO98004889

(56) Documents cités:
- EP-A- 0 138 541
- EP-A- 0 182 140
- WO-A-91/02950
- DE-A- 3 706 453
- DE-A- 3 724 411
- DE-A- 4 126 063
- US-A- 2 753 542
- US-A- 4 268 912
- US-A- 4 476 711
- US-A- 4 709 360
- ERNST H ET AL: "ULTRASCHALL-FUELLSTANDMESSUNG IN DER ANLAGEN- UND PROZESSTECHNIK" TM TECHNISCHES MESSEN, vol. 59, no. 9, 1 septembre 1992, MUNICH,DE, pages 347-352, XP000311730

## Description

La présente invention concerne le domaine des jauges de liquide à base de cellules piézo-électriques.

La présente invention trouve notamment application dans le jaugeage du niveau de carburant dans un réservoir de véhicules automobiles.

L'homme de l'art connait des systèmes de jaugeage à base de cellules piézo-électriques adaptées pour émettre une onde acoustique dans un liquide et détecter celle-ci, par exemple après réflexion sur une cible pour déterminer la hauteur de liquide parcourue par l'onde sur la base du temps séparant l'émission et la réception.

Le document EP-A-0182140 décrit un système de jaugeage piézo-électrique de liquide comprenant des moyens piézo-électriques aptes à émettre une onde acoustique dans un liquide et détecter l'onde pour déterminer la distance parcourue dans le liquide sur la base du temps séparant l'émission et la réception. Ce document décrit également un système comprenant au moins deux parties piézo-électriques distinctes issues d'une même pastille piézo-électrique.

Ces systèmes de jaugeage connus présentent l'intérêt de ne pas exiger de contacts électriques ni mécaniques par rapport aux jauges à flotteur mobile, par exemple les jauges comprenant un flotteur monté sur un bras pivotant.

La présente invention a maintenant pour but de perfectionner les systèmes de jaugeage piézo-électriques connus.

Ce but est atteint selon la présente invention grâce à un système de jaugeage piézo-électrique du type défini en revendication. 1 annexe.

D'autres caractéristiques, buts et avantages de l'invention apparaitront à la lecture de la description détaillée qui va suivre, et en regard des dessins annexés, donnés à titre d'exemple non limitatif et sur lesquels :
- la figure 1 représente une vue schématique en coupe verticale d'un réservoir de carburant incorporant un dispositif de jaugeage conforme à la présente invention,
- la figure 2 représente une vue en plan d'une cellulc piézo-élecirique conforme à la présente invention,
- les figures 3, 4 et 5 représentent respectivement une vue en plan côté liquide, une vue en plan côté opposé et une vue en coupe transversale d'une jauge conforme à un premier mode de réalisation de la présente invention,
- les figures 6, 7 et 8 représentent respectivement une vue en plan côté liquide, une vue en plan côté opposé et une vue en coupe transversale d'une jauge piézo-électrique conforme à une première variante de réalisation de la présente invention, et
- les figures 9, 10 et 11 représentent respectivement une vue en plan côté liquide, une vue en plan côté opposé et une vue en coupe transversale d'une jauge piézo-électrique conforme à une seconde variante de réalisation de la présente invention.

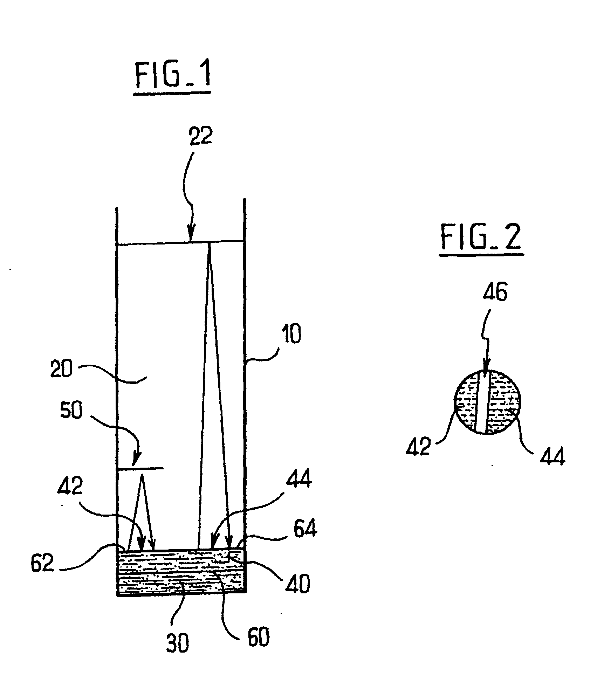

On aperçoit sur la figure 1 annexée, un réservoir 10 de liquide, par exemple de carburant pour véhicules automobiles. La forme du réservoir 10 illustrée sur la figure 1 n'est aucunement limitative. La forme de ce réservoir 10 peut faire l'objet de nombreuses variantes de réalisation.

Sur la figure 1, le liquide contenu dans le réservoir 10 porte la référence générale 20 et son niveau supérieur est référencé 22.

Selon l'invention, à la base du réservoir 10, il est prévu sur un support 30, un ensemble piézo-électrique 40 comportant deux parties actives piézo-électriques distinctes 42, 44, issues d'une même pastille piézo-électrique.

La séparation entre les deux parties actives 42, 44 à partir d'une même pastille d'origine peut être réalisée par tout moyen approprié, par exemple à l'aide d'électrorodage ou encore par découpe mécanique.

Selon une autre variante de réalisation, la pastille piézo-électrique est continue, sans discontinuité entre les deux parties actives 42, 44, et la délimitation entre celles-ci est définie par la géométrie des électrodes placées sur la pastille. En d'autres termes, côté liquide, les électrodes ne sont pas continues mais séparées par une découpe 46.

De préférence, comme on l'a illustré sur la figure 2, la ligne de séparation 46 entre les deux parties actives 42, 44 est rectiligne. Il est prévu en outre dans le réservoir 10, de préférence en partie inférieure de celui-ci, un obstacle de référence 50 apte à réfléchir les ondes acoustiques. Plus précisément, l'obstacle de référence 50 est placé en regard de la première partie active 42 de la cellule piézo-électrique. Ainsi, les deux parties actives 42, 44 sont adaptées pour diriger l'onde acoustique respectivement vers l'obstacle de référence 50 et vers la surface supérieure 22 du liquide.

De façon typique mais non limitative, la partie active 42 émettant en direction de l'obstacle de référence 50 couvre environ un tiers de la surface totale de la cellule piézo 40 tandis que la seconde partie active 44 couvre une surface de l'ordre des deux tiers de cette cellule.

De préférence, les deux parties actives 42, 44 possèdent une électrode commune 60 adjacente au support 30, et sur leurs surfaces opposées, côté liquide 20, des électrodes spécifiques 62, 64.

Le diamètre de la cellule piézo-électrique 40, circulaire, est typiquement de l'ordre de 20 mm.

A titre d'exemple non limitatif, les parties actives piézo-électriques 42, 44 sont adaptées pour émettre des ondes de l'ordre de 2MHz sous forme de signal carré.

Le fonctionnement du système est essentiellement le suivant.

Une onde acoustique est émise en direction de l'obstacle de référence 50 par la partie active piézo-électrique 42. Cette même partie active 42 est conçue pour détecter en retour l'onde acoustique réfléchie par l'obstacle 50. La distance séparant la partie active 42 et l'obstacle de référence 50 étant connue avec précision, la mesure du temps séparant l'émission et la réception de l'onde acoustique permet de calculer le coefficient de célérité propre au liquide 20 utilisé, par exemple propre à un carburant spécifique.

Une deuxième onde acoustique est émise vers la surface 22 du liquide par la partie active 44. Cette même partie active 44 est conçue pour détecter l'onde ainsi réfléchie par la surface supérieure 22 du liquide. Connaissant le coefficient de célérité du liquide 20 sur la base de la mesure obtenue avec la première partie active 42, le temps séparant l'émission et la réception de l'onde écho sur la seconde partie active 44 permet de calculer la hauteur du liquide 20 dans le réservoir, c'est-à-dire la distance séparant la surface de la partie active 44 et le niveau supérieur de liquide 22.

Dans le cadre de l'invention, il est prévu en outre de préférence des moyens adaptés pour mémoriser le dernier coefficient de célérité obtenu sur la base de la mesure résultant de la première partie active 42 avant que le niveau de liquide 20 dans le réservoir 10 ne devienne inférieur à l'obstacle de référence 50 et par conséquent avant que la mesure obtenue avec la première partie active 42 devienne non significative.

En outre, dans le cadre de l'invention, de préférence les moyens piézo-électriques 42, 44 sont alimentés par un courant calibré en intensité de sorte que la mesure de tension aux bornes des moyens 42, 44, qui dépend elle-même de la température, puisse permettre de déterminer la température du liquide 20. Cette mesure de température peut être exploitée dans certaines configurations pour effectuer une correction de la mesure de hauteur de liquide obtenue.

Selon une autre caractéristique avantageuse de l'invention, les systèmes de jaugeage comportent au moins une table de correspondance hauteur/volume tenant compte de la géométrie du réservoir 10 et permettant de délivrer directement une information de volume disponible dans le réservoir à partir de la mesure de hauteur précitée.

Selon une autre caractéristique avantageuse de l'invention, le système comporte en outre des moyens aptes à comparer la célérité de l'onde acoustique du liquide 20 résultant de la mesure obtenue à l'aide de la partie active piéxo-électrique 42 à une plage de valeurs associée au carburant 20 admis, pour émettre une alarme à l'attention du conducteur du véhicule en cas d'écart détecté significatif par exemple d'une erreur sur la nature du carburant utilisé pour remplir le réservoir.

L'information température du liquide 20 obtenue comme indiqué précédemment peut être utilisée en particulier pour le diagnostic du système d'alimentation.

La présente invention offre en particulier les avantages suivants.

L'utilisation de deux moyens piézo-électriques distincts issus d'une même pastille piézo-électrique permet une discrimination fiable entre les signaux respectifs de ces deux moyens en supprimant tous parasites par diaphonie. En outre, l'invention autorise un montage facile, permet un appairage automatique entre les deux moyens piézo-électriques 42, 44, conduit à un ensemble totalement autonome et un encombrement réduit.

Bien entendu la présente invention n'est pas limitée au mode de réalisation particulier qui vient d'être décrit, mais s'étend à toute variante conforme à son esprit.

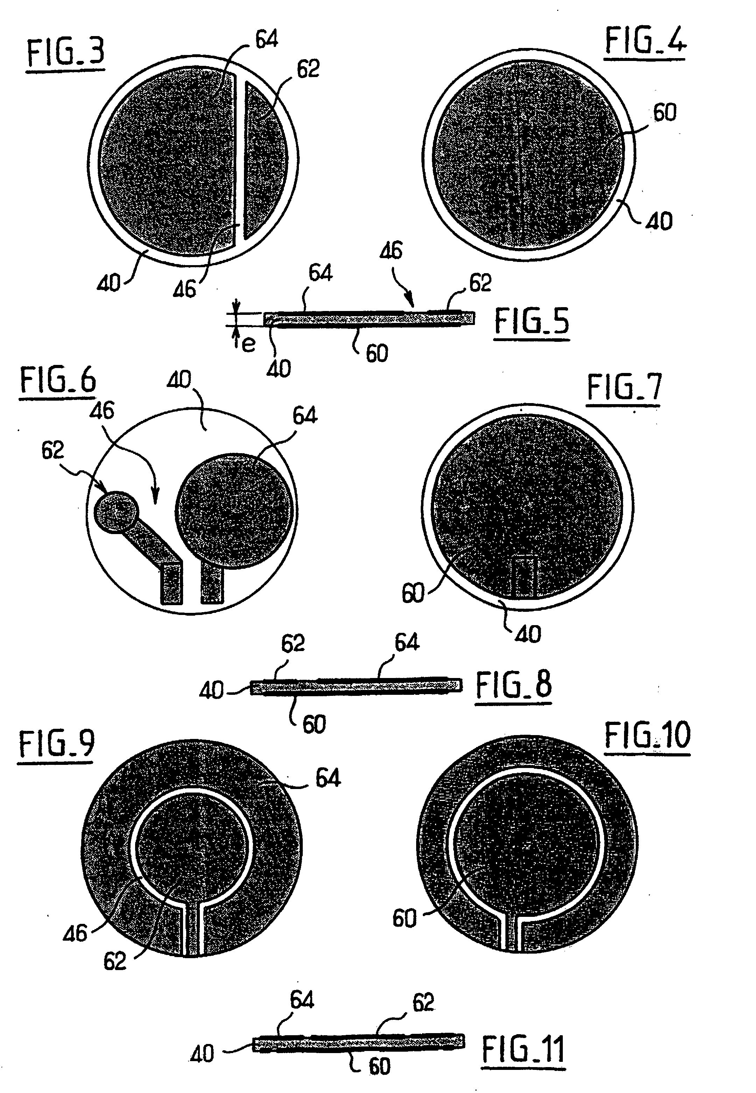

On a illustré sur les figures 3, 4 et 5, un premier mode de réalisation conforme à la présente invention selon lequel la pastille piézo-électrique 40 est formée d'un disque circulaire de révolution d'une épaisseur e de 1mm et d'un diamètre de 20mm.

Côté liquide, la pastille 40 est munie par métallisation de deux électrodes 62, 64. Chacune de ces électrodes 62, 64 est délimitée par un secteur périphérique circulaire de révolution et une corde droite reliant les extrémités de ces secteurs. A titre d'exemple non limitatif, la largeur de la découpe rectiligne 46 formée entre les électrodes 62, 64, pour délimiter les cordes précitées, est de l'ordre de 1mm ; une bordure annulaire d'une largeur de 1mm est conservée non métallisée sur la surface de la pastille, sur l'extérieur des électrodes 62, 64, de sorte que celles-ci s'appuient sur un rayon de l'ordre de 18mm ; et la hauteur h de l'électrode 62 dressée perpendiculairement à sa corde est de l'ordre de 5mm.

La seconde face de la pastille 60, c'est-à-dire la face opposée au liquide, est munie d'une électrode unique commune centrale circulaire 60 dont le rayon est identique à celui des électrodes 62, 64, c'est-à-dire en l'espèce de 18mm.

On a illustré sur les figures 6, 7 et 8, une première variante de réalisation selon laquelle, une pastille piézo-électrique 40 d'une épaisseur e de 1mm et de diamètre extérieur de 20mm est munie sur sa face adjacente au liquide de deux électrodes 62, 64 chacune circulaire d'un diamètre respectivement de 4,5mm et 11,5mm.

L'électrode 62 a son centre situé à 7,5mm du centre de la pastille 40. L'électrode 64 a son centre situé à 4mm du centre de la pastille 40. Les centres des deux électrodes 62, 64 sont situés dans un plan commun passant par l'axe de la pastille 40. Ces électrodes 62, 64 sont munies d'excroissance globalement radiale destinée à assurer la connexion électrique, par exemple par soudure.

La seconde face de la pastille 40, c'est-à-dire la face opposée au liquide est munie d'une électrode unique commune circulaire centrale 60 d'un diamètre de l'ordre de 18mm coïncidant sensiblement avec la plus grande distance séparant la périphérie extérieure des deux électrodes 62, 64.

Enfin, on a illustré sur les figures 9, 10 et 11 une deuxième variante de réalisation conforme à la présente invention, selon laquelle une pastille piézo-électrique 40 d'une épaisseur de l'ordre de 1mm et d'un diamètre de l'ordre de 20mm est munie sur sa face adjacente au liquide de deux électrodes 62, 64 concentriques de révolution. Ces deux électrodes 62, 64 sont ainsi séparées par une découpe 46 annulaire. En outre, l'électrode 64 radialement externe est munie d'une découpe radiale recevant une excroissance liée à l'électrode 62 centrale pour assurer le contactage.

A titre d'exemple non limitatif, l'électrode 62 centrale possède un diamètre de l'ordre de 11,5mm, la découpe annulaire 46 a une largeur de l'ordre de 1mm et l'électrode 64 radialement externe s'étend jusque sur la périphérie de la pastille 40.

La face opposée de la pastille 40 est munie d'une électrode unique commune 60 circulaire. Cependant, cette électrode 60 centrée sur la pastille 40 se caractérise selon la figure 10 par le fait qu'elle possède un diamètre extérieur inférieur à celui de l'électrode 64 radialement externe illustrée sur la figure 9. Cette disposition permet de faire travailler la matière piézo-électrique située entre l'électrode commune 60 et l'électrode annulaire externe 64, en oblique par rapport à l'axe de la pastille, pour recentrer le lobe d'émission/réception principal par rapport au réservoir de liquide.

## Revendications

1. Système de jaugeage piézo-électrique de liquide, notamment pour réservoir de carburant de véhicules automobiles comprenant des moyens piézo-électriques (40) aptes à émettre une onde acoustique dans un liquide (20) et détecter l'onde pour déterminer la distance parcourue dans le liquide (20) sur la base du temps séparant l'émission et la réception, les moyens piézo-électriques comprenant deux parties actives piézo-électriques distinctes (42, 44) issues d'une même pastille piézo-électrique (40) fixée en position dans le réservoir à mesurer, **caractérisé par le fait qu'**il comprend en outre un obstacle de référence (50) fixé à une distance déterminée et connue des moyens piézo-électriques (40), que les deux parties actives de ceux-ci sont aptes à diriger respectivement une onde acoustique en direction de l'obstacle de référence (50) et vers la surface (22) du liquide à jauger, et
qu'il comprend des moyens aptes à comparer le coefficient de célérité mesuré sur la base du temps séparant l'émission d'une onde vers l' obstacle de référence (50) et la détection de l'onde réfléchie par cet obstacle (50) avec une plage de célérité admise, et des moyens pour initier une procédure spécifique lorsque la célérité mesurée tombe en dehors de cette plage admise.

2. Système selon la revendication 1, **caractérisé par le fait que** les deux parties actives (42, 44) sont séparées par électrorodage.

3. Système selon la revendication 1, **caractérisé par le fait que** les deux parties actives (42, 44) sont séparées par découpe mécanique.

4. Système selon la revendication 1, **caractérisé par le fait que** la pastille piézo-électrique (40) est continue et la délimitation entre les deux parties actives (42, 44) est formée par une découpe (46) séparant des électrodes (62, 64).

5. Système selon l'une des revendications 1 à 4, **caractérisé par le fait que** les deux parties actives (42, 44) couvrent respectivement de l'ordre d'un tiers et de deux tiers de la pastille piézo-électrique d'origine.

6. Système selon l'une des revendications 1 à 5, **caractérisé par le fait que** la découpe (46) séparant les deux parties actives piézo-électriques (42, 44) est rectiligne.

7. Système selon l'une des revendications 1 à 6, **caractérisé par le fait que** la cellule piézo-électrique (40) comporte une électrode (60) commune aux deux parties actives (42, 44) et des électrodes respectives (62, 64).

8. Système selon l'une des revendications 1 à 7, **caractérisé par le fait que** le diamètre de la cellule piézo-électrique est de l'ordre de 20mm.

9. Système selon l'une des revendications 1 à 8, **caractérisé par le fait qu'**il comprend des moyens aptes à mémoriser le coefficient de célérité du carburant obtenu sur la base du temps séparant l'émission d'une onde vers l'obstacle de référence (50) et la réception de cette onde sur la partie active piézo-électrique correspondante (42) pour exploiter le coefficient de célérité mémorisé avant que le niveau du liquide devienne inférieur à l'obstacle de référence (50).

10. Système selon l'une des revendications 1 à 9, **caractérisé par le fait qu'**il comprend des moyens adaptés pour alimenter la cellule piézo-électrique (40) par un courant calibré et des moyens pour mesurer la tension aux bornes de la cellule piézo-électrique (40) afin d'en déduire la température du liquide (20) et opérer une correction de la mesure de jaugeage obtenue en fonction de cette température.

11. Système selon l'une des revendications 1 à 10, **caractérisé par le fait qu'**il comprend des moyens aptes à mémoriser au moins une table de correspondance entre le niveau de liquide mesuré et le volume de celui-ci.

12. Système selon l'une des revendications 1 à 11, **caractérisé par le fait que** ladite procédure spécifique initiée lorsque la célérité mesurée tombe en dehors de la plage admise est une alarme.

13. Système selon l'une des revendications 1 à 12, **caractérisé par le fait que** la pastille piézo-électrique (40) est munie sur sa face adjacente au liquide de deux électrodes (62, 64) délimitées par une périphérie extérieure en secteurs circulaires et par des cordes rectilignes parallèles, et sur sa face opposée au liquide d'une électrode commune circulaire.

14. Système selon l'une des revendications 1 à 12, **caractérisé par le fait que** la pastille piézo-électrique (40) est munie sur sa face adjacente au liquide de deux électrodes (62, 64) circulaires adjacentes, et sur sa face opposée d'une électrode commune (60) circulaire.

15. Système selon l'une des revendications 1 à 12, **caractérisé par le fait que** la pastille piézo-électrique (40) est munie sur sa face adjacente au liquide de deux électrodes (62, 64) concentriques, et sur sa face opposée d'une électrode commune (60) circulaire centrale.

16. Système selon la revendication 15, **caractérisé par le fait que** l'électrode commune (60) prévue sur la seconde face de la pastille piézo-électrique (40) possède un diamètre extérieur inférieur au diamètre extérieur de l'électrode externe (64) prévue sur la face de la pastille adjacente au liquide.

## Claims

1. A piezoelectric liquid-gauging system, in particular for a motor vehicle fuel tank, the system comprising piezoelectric means (40) suitable for emitting a soundwave in a liquid (20) and for detecting the wave to determine the distance travelled in the liquid (20) on the basis of the time between emission and reception, the piezoelectric means comprising two distinct piezoelectric active portions (42, 44) coming from the same piezoelectric pellet (40) which is fixed in position in the tank to be measured, the system being **characterized by** the fact that it further comprises a reference obstacle (50) fixed at a determined and known distance from the piezoelectric means (40), that the two active portions of said system are suitable for directing respective sound-waves towards the reference obstacle (50) and towards the surface (22) of the liquid to be gauged, and that it includes means suitable for comparing the propagation speed coefficient as measured on the basis of the time between emitting a wave towards the reference obstacle (50) and detecting the wave reflected by said obstacle (50) with an acceptable range of propagation speeds, and means for initiating a specific procedure when the measured propagation speed falls outside said acceptable range.

2. A system according to claim 1, **characterized by** the fact that the two active portions (42, 44) are separated by electrical lapping.

3. A system according to claim 1, **characterized by** the fact that the two active portions (42, 44) are separated by mechanical cutting.

4. A system according to claim 1, **characterized by** the fact that the piezoelectric pellet (40) is continuous and the boundary between the two active portions (42, 44) is formed by a cut (46) separating electrodes (62, 64).

5. A system according to any one of claims 1 to 4, **characterized by** the fact that the two active portions (42, 44) respectively occupy about one-third and about two-thirds of the original piezoelectric pellet.

6. A system according to any one of claims 1 to 5, **characterized by** the fact that the cut (46) separating the two piezoelectric active portions (42, 44) is rectilinear.

7. A system according to any one of claims 1 to 6, **characterized by** the fact that the piezoelectric cell (40) has an electrode (60) common to both active portions (42, 44) and respective electrodes (62, 64).

8. A system according to any one of claims 1 to 7, **characterized by** the fact that the diameter of the piezoelectric cell is about 20 mm.

9. A system according to any one of claims 1 to 8, **characterized by** the fact that it includes means suitable, prior to the liquid level becoming lower than the reference obstacle (50), for storing the propagation speed coefficient of the fuel as obtained on the basis of the time between emission of a wave towards the reference obstacle (50) and reception of said wave by the corresponding piezoelectric active portion (42) so as to be able to make use of the stored propagation speed coefficient.

10. A system according to any one of claims 1 to 9, **characterized by** the fact that it includes means adapted to feed the piezoelectric cell (40) with calibrated current and means for measuring the voltage across the terminals of the piezoelectric cell (40) in order to deduce the temperature of the liquid (20) therefrom and make a correction as a function of said temperature to the gauging measurement obtained.

11. A system according to any one of claims 1 to 10, **characterized by** the fact that it includes means suitable for storing at least one correspondence table between measured liquid level and liquid volume.

12. A system according to any one of claims 1 to 11, **characterized by** the fact that said initiated specific procedure, when the measured propagation speed falls outside the acceptable range, is an alarm.

13. A system according to any one of claims 1 to 12, **characterized by** the fact that the piezoelectric pellet (40) is provided on its face adjacent to the liquid with two electrodes (62, 64) defined by respective outer peripheries in the form of circular arcs, and by parallel rectilinear chords, and on its face facing away from the liquid with a circular common electrode.

14. A system according to any one of claims 1 to 12, **characterized by** the fact that the piezoelectric pellet (40) is provided on its face adjacent to the liquid with two adjacent circular electrodes (62, 64), and on its opposite face with a circular common electrode (60).

15. A system according to any one of claims 1 to 12, **characterized by** the fact that the piezoelectric pellet (40) is provided on its face adjacent to the liquid with two concentric electrodes (62, 64), and on its opposite face with a central circular common electrode (60).

16. A system according to claim 15, **characterized by** the fact that the common electrode (60) provided on the second face of the piezoelectric pellet (40) has an outside diameter that is smaller than the outside diameter of the outer electrode (64) provided on the face of the pellet that is adjacent to the liquid.

## Patentansprüche

1. Piezoelektrisches Flüssigstandsmesssystem, insbesondere für einen Treibstofftank von einem Kraftfahrzeug, mit piezoelektrischen Einrichtungen (40) zum Abstrahlen einer akustischen Welle in eine Flüssigkeit (20) und Erfassen der Welle zum Bestimmen des in der Flüssigkeit (20) durchlaufenen Weges auf Grund der Zeit zwischen Abstrahlung und Empfang, wobei die piezoelektrischen Einrichtungen zwei getrennte aktive Abschnitte (42, 44) auf einer gleichen piezoelektrischen Scheibe (40) umfassen, die in dem zu vermessenden Tank angeordnet ist, **dadurch gekennzeichnet, dass** es außerdem ein Referenzhindernis (50) umfasst, das in einem vorgegebenen und bekannten Abstand von den piezoelektrischen Einrichtungen (40) angeordnet ist, und dass seine beiden aktiven Abschnitte dazu dienen, jeweils eine akustische Welle in Richtung auf das Referenzhindernis (50) und in Richtung auf die Oberfläche (22) der zu messenden Flüssigkeit zu senden, und dass es Einrichtungen zum Vergleichen des Geschwindigkeitskoeffizienten, der auf Grund der Zeit zwischen Ausstrahlung einer Welle in Richtung auf das Referenzhindernis (50) und die Erfassung der durch dieses Hindernis (50) reflektierten Welle gemessen wurde, mit einem Zulässigkeitsbereich für die Geschwindigkeit und Einrichtungen zum Initiieren eines speziellen Verfahrens umfasst, wenn die gemessene Geschwindigkeit außerhalb dieses Zulässigkeitsbereiches liegt.

2. System nach Anspruch 1, **dadurch gekennzeichnet, dass** die zwei aktiven Abschnitte (42, 44) durch Elektroschneiden getrennt werden.

3. System nach Anspruch 1, **dadurch gekennzeichnet, dass** die zwei aktiven Abschnitte (42, 44) durch mechanisches Spalten getrennt werden.

4. System nach Anspruch 1, **dadurch gekennzeichnet, dass** die piezoelektrische Scheibe (40) unversehrt ist und die Abgrenzung zwischen den zwei aktiven Abschnitten (42, 44) durch einen Spalt (46) erfolgt, durch den Elektroden (62, 64) separiert werden.

5. System nach einem der Ansprüche 1 bis 4, **dadurch gekennzeichnet, dass** die zwei aktiven Abschnitte (42, 44) jeweils in etwa ein Drittel bzw. zwei Drittel der ursprünglichen piezoelektrischen Scheibe bedecken.

6. System nach einem der Ansprüche 1 bis 5, **dadurch gekennzeichnet, dass** der Spalt (46), der die beiden piezoelektrischen aktiven Abschnitte (42, 44) trennt, gerade ist.

7. System nach einem der Ansprüche 1 bis 6, **dadurch gekennzeichnet, dass** die piezoelektrische Zelle (40) für die beiden aktiven Abschnitte (42, 44) gemeinsame eine Elektrode (60) und jeweilige Elektroden (62, 64) umfasst.

8. System nach einem der Ansprüche 1 bis 7, **dadurch gekennzeichnet, dass** der Durchmesser der piezoelektrischen Zelle in der Ordnung von 20 mm liegt.

9. System nach einem der Ansprüche 1 bis 8, **dadurch gekennzeichnet, dass** es Einrichtungen zum Abspeichern des Geschwindigkeitskoeffizienten des Treibstoffs umfasst, der auf Grund der Zeit zwischen Ausstrahlung einer Welle auf das Referenzhindernis (50) und Empfang dieser Welle durch den entsprechenden aktiven Abschnitt (42) bestimmt wurde, um den abgespeicherten Geschwindigkeitskoeffizienten zu sichern, bevor der Pegel der Flüssigkeit unter das Referenzhindernis (50) sinkt.

10. System nach einem der Ansprüche 1 bis 9, **dadurch gekennzeichnet, dass** es Einrichtungen zum Versorgen der piezoelektrischen Zelle (40) mit einem Strom, der eingestellt ist, und Einrichtungen zum Messen der Spannung an den Anschlüssen der piezoelektrischen Zelle (40) umfasst, um daraus die Temperatur der Flüssigkeit (20) abzuleiten und eine Korrektur der Füllstandsmessung in Abhängigkeit von dieser Temperatur durchzuführen.

11. System nach einem der Ansprüche 1 bis 10, **dadurch gekennzeichnet, dass** es Einrichtungen umfasst zum Abspeichern von wenigstens einer Korrespondenztabelle mit gemessenem Flüssigkeitspegel und dessen Volumen.

12. System nach einem der Ansprüche 1 bis 11, **dadurch gekennzeichnet, dass** das spezielle Verfahren, das initiiert wird, wenn die gemessene Geschwindigkeit aus dem Zulässigkeitsbereich fällt, ein Alarm ist.

13. System nach einem der Ansprüche 1 bis 12, **dadurch gekennzeichnet, dass** die piezoelektrische Scheibe (40) auf ihrer Seite zur Flüssigkeit hin mit zwei Elektroden (62, 64), die durch einen Außenrand in Kreisabschnitte unterteilt und durch gerade, parallele Sekanten abgegrenzt werden, und auf ihrer Fläche gegenüber der Flüssigkeit mit einer gemeinsamen kreisförmigen Elektrode versehen ist.

14. System nach einem der Ansprüche 1 bis 12, **dadurch gekennzeichnet, dass** die piezoelektrische Scheibe (40) auf ihrer Seite zur Flüssigkeit hin mit zwei kreisförmigen, benachbarten Elektroden (62, 64) und auf ihrer Seite gegenüber mit einer kreisförmigen gemeinsamen Elektrode (60) versehen ist.

15. System nach einem der Ansprüche 1 bis 12, **dadurch gekennzeichnet, dass** die piezoelektrische Scheibe (40) auf ihrer Seite zur Flüssigkeit hin mit zwei konzentrischen Elektroden (62, 64) und auf ihrer Seite gegenüber mit einer zentralen kreisförmigen gemeinsamen Elektrode (60) versehen ist.

16. System nach Anspruch 15, **dadurch gekennzeichnet, dass** die gemeinsame Elektrode (60) auf der zweiten Fläche der piezoelektrischen Scheibe (40) einen Außendurchmesser aufweist, der kleiner als der Außendurchmesser der externen Elektrode (64) auf der Seite der Scheibe zur Flüssigkeit hin ist.
